# EUROPÄISCHE PATENTSCHRIFT

(11) **EP 2 321 507 B1**
(45) Veröffentlichungstag und Bekanntmachung des Hinweises auf die Patenterteilung: **29.05.2013**
(21) Anmeldenummer: 09781103.8
(22) Anmeldetag: 27.07.2009
(51) Int. Cl.: F01N 13/08, F01N 9/00, F02N 11/08

(54) **VERFAHREN ZUM BETREIBEN EINES WATFÄHIGEN KRAFTFAHRZEUGS SOWIE WATFÄHIGES KRAFTFAHRZEUG**
METHOD FOR OPERATING A SUBMERSIBLE MOTOR VEHICLE AND SUBMERSIBLE MOTOR VEHICLE
PROCÉDÉ DE MISE EN UVRE D'UN VÉHICULE POUR PASSAGE À GUÉ ET VÉHICULE POUR PASSAGE À GUÉ

(30) Priorität: 07.08.2008 DE 102008041105
(43) Veröffentlichungstag der Anmeldung: 18.05.2011
(73) Patentinhaber: Robert Bosch GmbH, 70442 Stuttgart (DE)
(72) Erfinder: NORDEN, Roland, 71706 Markgroeningen (DE); BILDSTEIN, Michael, 70469 Stuttgart (DE); PRICKARZ, Herbert, 70734 Fellbach (DE); SCHMOLL GENANNT EISENWERTH, Kaspar, 74343 Sachsenheim (DE)
(86) Internationale Anmeldenummer: PCT/EP2009/059639
(87) Internationale Veröffentlichungsnummer: WO 2010/015537

(56) Entgegenhaltungen:
- US-A- 4 787 869
- US-A- 5 355 673
- US-A1- 2008 155 964

## Beschreibung

Die Erfindung betrifft ein Verfahren zum Betreiben eines Kraftfahrzeugs gemäß dem Oberbegriff des Anspruchs 1, sowie ein Kraftfahrzeug gemäß dem Oberbegriff des Anspruchs 14.

### Stand der Technik

Insbesondere Kraftfahrzeuge mit einem Dieselmotor und einer Abgasnachbehandlungseinrichtung, die einen im Abgastrakt des Dieselmotors angeordneten Partikelfilter umfasst, sind häufig mit einem Differenzdrucksensor ausgestattet, mit dem sich die Differenz von Abgasdrücken vor und hinter dem Partikelfilter erfassen lässt, um durch Auswertung der erfassten Druckdifferenz die momentane Beladung des Partikelfilters mit Rußpartikeln bzw. den optimalen Zeitpunkt zur Regeneration des Partikelfilters abzuleiten.

Besonders diejenigen Fahrzeuge, die geländegängig sind, müssen in der Regel eine gewisse Mindestwatfähigkeit zum Durchfahren flacher Gewässer aufweisen, wobei die Austrittsöffnung ihres Auspuffendrohrs unter die Wasseroberfläche gelangen kann. Um zu verhindern, dass in das Auspuffendrohr eindringendes Wasser Teile des Abgastrakts flutet und dadurch Schäden am Partikelfilter oder anderen Komponenten der Abgasnachbehandlungseinrichtung verursacht, sind watfähige Kraftfahrzeuge allgemein so ausgelegt, dass die im Betrieb befindliche Brennkraftmaschine bei einer Watfahrt nicht abgewürgt werden kann und der im Betrieb der Brennkraftmaschine erzeugte Abgasdruck ein Vordringen von Wasser bis zum Auspuffendtopf verhindert.

Infolge anhaltender Bemühungen der Kraftfahrzeugindustrie zur Verminderung der Abgasemissionen und des Kraftstoffverbrauchs von Kraftfahrzeugen werden diese außerdem zunehmend häufiger mit einem Hybridantrieb und mit einer sogenannten Start-Stop-Automatik ausgestattet, welche die Brennkraftmaschine in Abhängigkeit von erfassten Betriebsparametern, wie z. B. Batterieladezustand, Motortemperatur, Katalysatortemperatur, Fahr- oder Bremspedalstellung und Gangwahl in unterschiedlichen Betriebszuständen abstellt und wieder startet, zum Beispiel bei einem Stillstand des Fahrzeugs.

Wenn es sich bei geländegängigen bzw. watfähigen Kraftfahrzeugen um Mikro-, Mild- oder Vollhybridfahrzeuge mit Start-Stop-Automatik handelt, können im Betrieb dieser Fahrzeuge Situationen auftreten, in denen die Start-Stop-Automatik die Brennkraftmaschine während einer Watfahrt abstellt, zum Beispiel wenn das Fahrzeug beim Durchqueren eines Gewässers angehalten wird. Sofern sich zu diesem Zeitpunkt die Austrittsöffnung des Auspuffendrohrs ganz oder teilweise unterhalb der Wasseroberfläche befindet, kann dies infolge des fehlenden Abgasdrucks zum Vollaufen von Teilen des Abgastrakts führen.

Ausgehend hiervon liegt der Erfindung die Aufgabe zugrunde, Schäden an Komponenten der Abgasnachbehandlungseinrichtung infolge eines Eindringens von Wasser, Schlamm oder dergleichen flüssigen Medien in den Abgastrakt des Kraftfahrzeugs sicher zu verhindern.

### Offenbarung der Erfindung

Diese Aufgabe wird erfindungsgemäß dadurch gelöst, dass eine Druckdifferenz und vorzugsweise eine in einem Abgastrakt der Brennkraftmaschine erfasste ausgewertet wird, um ein Eintauchen oder Untertauchen eines Endrohrs des Abgastrakts in Wasser, Schlamm oder dergleichen flüssigen Medien zu detektieren.

Das erfindungsgemäße Verfahren ist bevorzugt für Kraftfahrzeuge mit Hybridantrieb und Start-Stopp-Automatik bestimmt, bei denen die Start-Stopp-Automatik in Abhängigkeit von einem Ergebnis der Auswertung so gesteuert wird, dass ein Abstellen der Brennkraftmaschine durch die Start-Stopp-Automatik verhindert und/oder eine abgestellte Brennkraftmaschine mittels der Start-Stopp-Automatik gestartet wird, wenn die Auswertung der Druckdifferenz auf ein Eintauchen oder Untertauchen des Endrohrs des Abgastrakts in Wasser oder Schlamm bei einer Watfahrt des Kraftfahrzeugs schließen lässt.

Das erfindungsgemäße Verfahren kann jedoch grundsätzlich auch bei konventionellen, nur mit einer Brennkraftmaschine ausgestatteten watfähigen Kraftfahrzeugen eingesetzt werden, indem durch eine geeignete Ansteuerung der Zündanlage in Abhängigkeit vom Ergebnis der Auswertung nach einem Eintauchen oder Untertauchen des Endrohrs des Abgastrakts in Wasser oder Schlamm während einer Watfahrt ein Abstellen der Brennkraftmaschine durch den Fahrer des Kraftfahrzeugs verhindert wird.

Eine besonders für Kraftfahrzeuge mit Dieselmotor geeignete Ausgestaltung der Erfindung sieht vor, zum Detektieren des Eintauchens oder Untertauchens des Endrohrs des Abgastrakts in Wasser oder Schlamm die Druckdifferenz zwischen einem vor und hinter einem Partikelfilter im Abgastrakt der Brennkraftmaschine erfassten Abgasdruck auszuwerten, da diese Druckdifferenz bei vielen Kraftfahrzeugen mit Dieselmotor bereits standardmäßig mittels eines Differenzdrucksensors erfasst und ausgewertet wird, um als Grundlage für eine Regeneration des Partikelfilters dessen Beladezustand zu ermitteln. In diesem Fall kann sowohl der vorhandene Differenzdrucksensor als auch eine zur Auswertung der Messergebnisse des Differenzdrucksensors dienende vorhandene Auswerteeinrichtung genutzt werden, wobei lediglich die Auswerteeinrichtung für die zusätzliche Funktion angepasst oder umprogrammiert werden muss.

Vorzugsweise wird von der Auswerteeinrichtung eine zeitabhängige Änderung der Druckdifferenz ausgewertet, wobei vorteilhaft beim Auftreten eines steilen Abfalls der Druckdifferenz auf einen durch Eindringen von Wasser oder Schlamm in das Endrohr des Abgastrakts verursachten steilen Anstieg des Abgasdrucks hinter dem Partikelfilter geschlossen wird. Alternativ oder zusätzlich kann jedoch auch ein durch ein schwallartiges Entweichen von Abgas aus dem Endrohr verursachter diskontinuierlicher Verlauf der Druckdifferenz während eines Abfalls der Druckdifferenz und/oder ein durch den Austritt von einzelnen Abgasblasen aus dem Endrohr hervorgerufener wellenförmiger Verlauf der Druckdifferenz nach einem Abfall als Anzeichen für ein Eintauchen bzw. Untertauchen des Endrohrs in Wasser oder Schlamm gewertet werden.

Darüber hinaus ist es jedoch auch möglich, die erfasste Druckdifferenz mit mindestens einer bei ein- oder untergetauchtem Endrohr aufgenommenen gespeicherten Druckdifferenz zu vergleichen oder den zeitlichen Verlauf der Druckdifferenz mit mindestens einem bei ein oder untergetauchtem Endrohr aufgenommenen gespeicherten Druckdifferenzverlauf zu vergleichen und auf ein Eintauchen oder Untertauchen des Endrohrs in Wasser oder Schlamm zu schließen, wenn der Vergleich erhebliche Übereinstimmungen ergibt

Wenn während des Betriebs der Brennkraftmaschine bei der Auswertung der Druckdifferenz auf ein Eintauchen oder Untertauchen des Endrohrs in Wasser oder Schlamm geschlossen wird, wird vorzugsweise ein Blockiersignal an die Start-Stop-Automatik bzw. die Zündanlage des Kraftfahrzeugs übermittelt, wobei diese vorzugsweise so ausgebildet oder programmiert sind, dass während der Dauer des Empfangs des Blockiersignals oder bis zum Empfang eines das Blockiersignal aufhebenden Freigabesignals ein Abstellen der Brennkraftmaschine durch die Start-Stop-Automatik bzw. durch Umdrehen eines Zündschlüssels von Seiten des Fahrers verhindert wird.

Um zu verhindern, dass der Fahrer sein Kraftfahrzeug mit abgestellter Brennkraftmaschine ins Wasser rollen lässt, was infolge des fehlenden Abgasdrucks zum Fluten des Abgastrakts oder eines Teils desselben führen kann, wird gemäß einer weiteren vorteilhaften Ausgestaltung der Erfindung zumindest bei Kraftfahrzeugen mit einer Start-Stop-Automatik vorgeschlagen, dass die Start-Stop-Automatik die abgestellte Brennkraftmaschine selbsttätig startet, wenn die Auswertung der Druckdifferenz bei abgestellter Brennkraftmaschine auf ein Eintauchen oder Untertauchen des Endrohrs des Abgastrakts in Wasser oder Schlamm schließen lässt. Dies ist beispielsweise dann der Fall, wenn der Differenzdrucksensor eine negative Druckdifferenz erfasst, weil der Druck im Abgastrakt hinter dem Partikelfilter infolge von einströmendem Wasser oder Schlamm höher als vor dem Partikelfilter ist. Nach dem Start der Brennkraftmaschine kann zusätzlich vorgesehen werden, die Leerlaufdrehzahl anzuheben und/oder den Einspritzbeginn bzw. den Zündwinkel der Brennkraftmaschine anzupassen, um den Abgasvolumenstrom zu erhöhen und dadurch auch bei größeren Wattiefen ein Eindringen von flüssigem Medium in den Abgastrakt sicher zu verhindern.

Im Hinblick auf die Brennkraftmaschine wird die Aufgabe erfindungsgemäß dadurch gelöst, dass das Kraftfahrzeug Mittel zur Ansteuerung seiner Start-Stopp-Automatik oder seiner Zündanlage in Abhängigkeit vom Ergebnis der Auswertung der Auswerteeinrichtung umfasst. Vorzugsweise übermittelt die Auswerteeinrichtung ein Blockiersignal zur Start-Stop-Automatik bzw. zur Zündanlage übermittelt, das im Betrieb der Brennkraftmaschine ein Abstellen derselben verhindert, wenn die vom Differenzdrucksensor erfasste und von der Auswerteeinrichtung ausgewertete Druckdifferenz auf ein Eintauchen oder Untertauchen eines Endrohrs des Abgastrakts in Wasser oder Schlamm schließen lässt.

Grundsätzlich können an Stelle eines Differenzdrucksensors auch ein Umgebungsdrucksensor und ein Abgasdrucksensor verwendet werden, um ein Eintauchen oder Untertauchen des Endrohrs des Abgastrakts in Wasser oder Schlamm zu detektieren. In diesem Fall wird von der Auswerteeinrichtung die Druckdifferenz zwischen dem vom Umgebungsdrucksensor erfassten Absolutdruck und dem vom Abgasdrucksensor erfassten Absolutdruck ausgewertet, die beim Eintauchen oder Untertauchen des Endrohrs des Abgastrakts in Wasser oder Schlamm ansteigt

### Kurze Beschreibung der Zeichnungen

Im folgenden wird die Erfindung anhand eines in der Zeichnung dargestellten Ausführungsbeispiels näher erläutert. Es zeigen:
- Fig. 1: eine schematische Darstellung von Teilen eines Abgastraktes eines dieselgetriebenen Kraftfahrzeugs mit einem Partikelfilter und einem Differenzdrucksensor;
- Fig. 2: den Verlauf einer vom Differenzdrucksensor gemessenen Druckdifferenz zwischen zwei Messpunkten vor und hinter dem Partikelfilter vor, während und nach einer Regeneration des Partikelfilters;
- Fig. 3: den Verlauf einer vom Differenzdrucksensor gemessenen Druckdifferenz zwischen den beiden Messpunkten beim Eintauchen und Untertauchen eines Endrohrs des Abgastrakts in Wasser.

### Ausführungsform der Erfindung

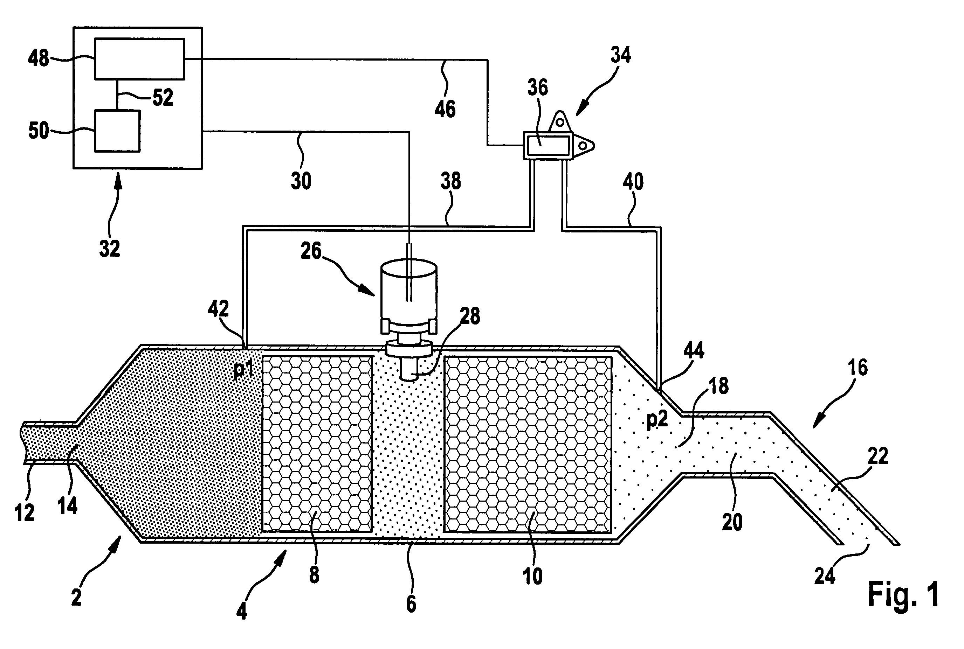

Der in Fig. 1 nur teilweise dargestellte Abgastrakt 2 eines dieselgetriebenen geländegängigen und watfähigen Kraftfahrzeugs umfasst einen Partikelfilter 4, der Teil einer Abgasnachbehandlungseinrichtung des Kraftfahrzeugs ist. Der Partikelfilter 4 besteht im Wesentlichen aus einem zylindrischen Filtergehäuse 6 und zwei im Abstand voneinander in das Filtergehäuse 6 eingesetzten, vom Abgas eines Dieselmotors (nicht dargestellt) des Kraftfahrzeugs durchströmten Filtereinsätzen 8, 10. Das Filtergehäuse 6 weist einen durch ein Abgasrohr 12 mit dem Dieselmotor verbundenen Einlass 14 und einen mit einer Auspuffanlage 16 des Abgastrakts 2 verbundenen Auslass 18 auf, wobei der Einlass 14 und der Auslass 18 an entgegengesetzten verjüngten Stirnenden des Filtergehäuses 6 angeordnet sind. Die Auspuffanlage 16 umfasst in bekannter Weise einen Auspuffendtopf 20 und ein Endrohr 22 mit einer schräg nach unten weisenden Austrittsöffnung 24 für das Abgas.

Der Abgastrakt 2 ist zudem mit einem Temperatursensor 26 ausgestattet, der an der Außenseite des Filtergehäuses 6 montiert ist und einen zwischen den Filtereinsätzen 8, 10 ins Innere des Filtergehäuses 6 ragenden Temperaturfühler 28 aufweist. Der Temperatursensor 26 ist über eine Signalleitung 30 mit einem zur Steuerung des Dieselmotors dienenden Motorsteuergerät 32 verbunden. Der Temperatursensor 26 erfasst im Betrieb des Dieselmotors die Abgastemperatur im Inneren des Filtergehäuses 6 und übermittelt diese an das Motorsteuergerät 32.

Der Abgastrakt 2 ist weiter mit einem Differenzdrucksensor 34 ausgestattet. Der Differenzdrucksensor 34 umschließt in bekannter Weise einen Hohlraum 36, der von einer Membran (nicht dargestellt) in zwei gasdicht voneinander getrennte Kammern unterteilt wird. Eine der beiden Kammern ist mit einer ersten Druckmessleitung 38 verbunden, die vor dem ersten Filtereinsatz 8 ins Innere des Filtergehäuses 6 mündet, während die andere Kammer mit einer zweiten Druckmessleitung 40 verbunden ist, die hinter dem zweiten Filtereinsatz 10 ins Innere des Filtergehäuses 6 mündet.

Der Differenzdruckmesser 34 misst über die Auslenkung der Membran zwischen den beiden Kammern die Druckdifferenz zwischen den beiden Kammern, die der Differenz der Abgasdrücke zwischen zwei Messpunkten 42 und 44 an den Einmündungen der beiden Druckmessleitungen 38 bzw. 40 in das Filtergehäuse 6 entspricht

Der Differenzdruckmesser 34 ist über eine Signalleitung 46 mit einer Auswerteeinrichtung 48 verbunden, die hier Teil des Motorsteuergeräts 32 des Dieselmotors ist, jedoch auch als eine separate Einheit ausgebildet sein kann. Neben der Auswerteeinrichtung 34 umfasst das Motorsteuergerät 32 weiter eine Start-Stopp-Automatik 50, die den Dieselmotor in Abhängigkeit von einer jeweiligen Betriebsstrategie bei Vorliegen bestimmter, von der Betriebsstrategie vorgegebener Betriebszustände selbsttätig abstellt bzw. erneut startet. Die Start-Stopp-Automatik 50 ist über eine Signalleitung 52 mit der Auswerteeinrichtung 48 verbunden.

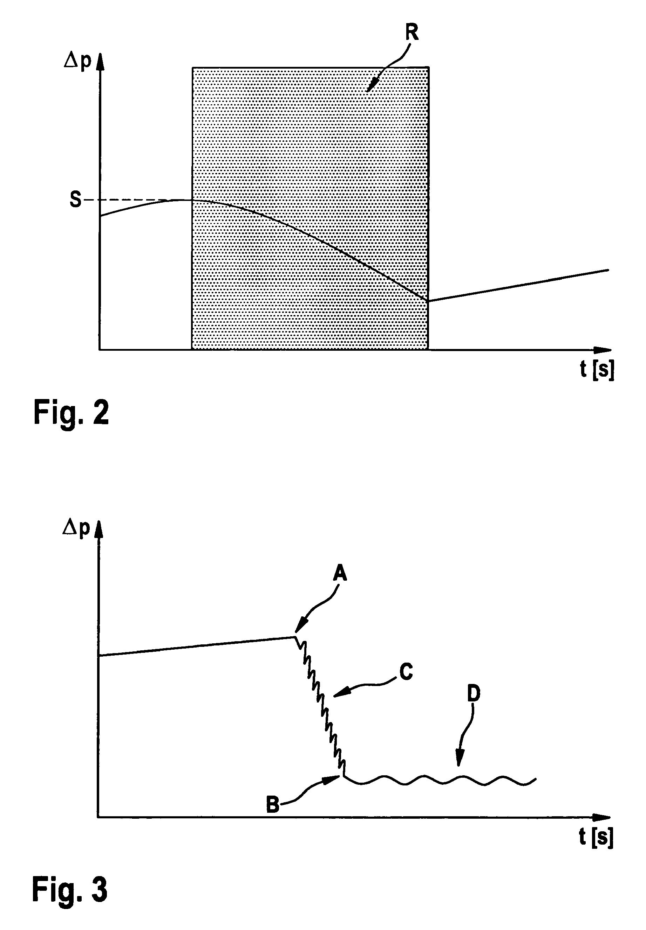

Die Auswerteeinrichtung 48 dient im Betrieb des Dieselmotors in an sich bekannter Weise dazu, durch Auswertung der gemessenen Druckdifferenz Δp zwischen den beiden Messpunkten 42, 44 die Regeneration der Filtereinsätze 8, 10 des Partikelfilters 4 einzuleiten, wenn deren Beladung mit Rußpartikeln und damit die Druckdifferenz Δp = p1 - p2 der Abgasdrücke p1 vor und p2 hinter den Filtereinsätzen 8, 10 einen vorbestimmten Schwellenwert S übersteigt, wie in Fig. 2 dargestellt. Während der Regeneration des Partikelfilters 4 werden die Rußpartikel auf den Filtereinsätzen 8, 10 verbrannt, wodurch die Druckdifferenz Δp zwischen den beiden Messpunkten 42, 44 wieder abnimmt, wie in Fig. 2 in dem Bereich R = Regeneration dargestellt Nach Abschluss der Regeneration steigt die Druckdifferenz Δp wieder langsam an, während sich erneut Rußpartikel auf den Filtereinsätzen 8, 10 ansammeln.

Darüber hinaus dient die Auswerteeinrichtung 48 jedoch auch noch zu dem Zweck, durch Auswertung der erfassten Druckdifferenz Δp zwischen den beiden Messpunkten 42, 44 bzw. durch Auswertung des Verlaufs der Druckdifferenz Δp ein Eintauchen oder Untertauchen des Endrohrs 22 der Auspuffanlage 16 in Wasser im Falle einer Wat- oder Wasserfahrt des Kraftfahrzeugs zu erfassen.

Bei laufendem Dieselmotor führt das Eintauchen des Endrohrs 22 in Wasser dazu, dass das Abgas nicht mehr ungehindert durch die Austrittsöffnung 24 des Endrohrs 22 entweichen kann, wenn sich diese letztere ganz oder teilweise unterhalb des Wasserspiegels befindet. Während die Austrittsöffnung 24 des Endrohrs 22 in das Wasser eintaucht, nimmt der freie Öffnungsquerschnitt des Endrohrs 22 relativ schnell ab, wodurch der Strömungswiderstand des Abgases im Endrohr 22 und damit auch der Abgasdruck p2 am Messpunkt 44 hinter den Filtereinsätzen 8, 10 zunimmt Dies wiederum führt zu einer Abnahme der vom Differenzdrucksensor 34 erfassten Druckdifferenz Δp, wie in Fig. 3 zwischen den beiden Zeitpunkten A und B dargestellt, von denen A den Zeitpunkt des Beginns des Eintauchens der Austrittsöffnung 24 des Endrohrs 22 ins Wasser und B den Zeitpunkt des kompletten Eintauchens der Austrittsöffnung 24 ins Wasser darstellt

Wie man durch Vergleich des in Fig. 2 dargestellten Verlaufs der Druckdifferenz Δp während einer Regeneration des Partikelfilters 4 einerseits und des in Fig. 3 dargestellten Verlaufs der Druckdifferenz Δp während einer Wat- oder Wasserfahrt des Kraftfahrzeugs sehen kann, ist zum einen während der Abnahme der Druckdifferenz Δp im zuletzt genannten Fall der Gradient des Druckdifferenzverlaufs im Bereich zwischen den beiden Zeitpunkten A und B erheblich steiler als im zuerst genannten Fall der Gradient im Bereich R, so dass durch Auswertung des Gradienten deutlich zwischen einer Filterregeneration und einer Wat- oder Wasserfahrt unterschieden werden kann.

Ein weiteres, zur Unterscheidung zwischen Filterregeneration und Wat- oder Wasserfahrt geeignetes Merkmal besteht in der in Fig. 3 dargestellten diskontinuierlichen oder stufenförmigen Abnahme der Druckdifferenz Δp zwischen den beiden Zeitpunkten A und B. Ein solcher Verlauf der Druckdifferenz Δp wird dadurch verursacht, dass das Abgas während des Eintauchens des Endrohrs 22 in Wasser schwallartig aus der Austrittsöffnung 24 des Endrohrs 22 austritt, so dass der Abgasdruck p2 hinter dem Partikelfilter 4 während dieses Vorgangs nicht stetig sondern diskontinuierlich zunimmt, was zu einer entsprechenden diskontinuierlichen Abnahme der Druckdifferenz Δp führt, wie bei C in Fig. 3 dargestellt

Darüber hinaus ist auch der Verlauf des Differenzdrucks Δp nach einem vollständigen Untertauchen der Austrittsöffnung 24 des Endrohrs 22 als Unterscheidungsmerkmal zwischen Filterregeneration und Watfahrt geeignet, da im zuerst genannten Fall auf einen Abfall der Druckdifferenz Δp ein erneuter langsamer stetiger Anstieg derselben folgt, wie in Fig. 2 dargestellt, während im zuletzt genannten Fall ein durch das Austreten des Abgases in Form von einzelnen Blasen bedingter wellenförmiger Verlauf der Druckdifferenz Δp zu verzeichnen ist, wie bei D in Fig. 3 dargestellt.

Die in den Figuren 2 und 3 dargestellten Verläufe der Druckdifferenz Δp stellen idealisierte Verläufe dar, die in der Praxis im Detail auch andere Formen aufweisen können.

Wenn die Auswertung des Verlaufs der Druckdifferenz Δp in der Auswerteeinrichtung 48 ergibt, dass das Endrohr 22 der Auspuffanlage 16 mit seiner Austrittsöffnung 24 ganz oder teilweise in Wasser eingetaucht ist, übermittelt die Auswerteeinrichtung 48 über die Signalleitung 52 ein Blockiersignal an die Start-Stopp-Automatik 50, das bei eingeschalteter Start-Stopp-Automatik 50 ein Abstellen des Dieselmotors durch die Start-Stopp-Automatik 50 verhindert. Dadurch bleibt der Ausstoß von Abgas während einer Wat- oder Wasserfahrt sichergestellt, womit ein Auftreten von Schäden an Komponenten der Abgasnachbehandlungsanlage durch eindringendes Wasser sicher verhindert werden kann.

Wenn die vom Differenzdrucksensor 34 erfasste Druckdifferenz Δp bei einem erneuten Austritt des Endrohrs 22 aus dem Wasser wieder steil ansteigt, wird von der Auswerteeinrichtung 48 ein Freigabesignal an die Start-Stopp-Automatik 50 übermittelt, woraufhin diese in ihren ursprünglichen Betriebszustand vor dem Empfang des Blockiersignals zurückversetzt wird.

## Patentansprüche

1. Verfahren zum Betreiben eines Kraftfahrzeugs mit einer Brennkraftmaschine, **dadurch gekennzeichnet, dass** eine Druckdifferenz (Δp) ausgewertet wird, um ein Eintauchen oder Untertauchen eines Endrohrs (22) des Abgastrakts (2) in Wasser, Schlamm oder dergleichen flüssigen Medien zu detektieren.

2. Verfahren nach Anspruch **1, dadurch gekennzeichnet, dass** eine in einem Abgastrakt (2) der Brennkraftmaschine erfasste Druckdifferenz (Δp) ausgewertet wird.

3. Verfahren nach Anspruch 1 oder 2, **dadurch gekennzeichnet, dass** die Druckdifferenz (Δp) zwischen Abgasdrücken (p1) vor und (p2) hinter einem Partikelfilter (4) im Abgastrakt (2) der Brennkraftmaschine zum Detektieren des Eintauchens oder Untertauchens des Endrohrs (22) ausgewertet wird.

4. Verfahren nach einem der vorangehenden Ansprüche, **dadurch gekennzeichnet, dass** die Druckdifferenz (Δp) mit einem Differenzdrucksensor (34) erfasst wird.

5. Verfahren nach einem der vorangehenden Ansprüche, **dadurch gekennzeichnet, dass** zum Detektieren des Eintauchens oder Untertauchens des Endrohrs (22) eine zeitabhängige Änderung der Druckdifferenz (Δp) ausgewertet wird.

6. Verfahren nach einem der vorangehenden Ansprüche, **dadurch gekennzeichnet, dass** beim Auftreten eines steilen Abfalls der Druckdifferenz (Δp) auf ein Eintauchen des Endrohrs (22) in Wasser, Schlamm oder dergleichen flüssigen Medien geschlossen wird.

7. Verfahren nach einem der vorangehenden Ansprüche, **dadurch gekennzeichnet, dass** beim Auftreten eines diskontinuierlichen Abfalls der Druckdifferenz (Δp) auf ein Eintauchen des Endrohrs (22) in Wasser, Schlamm oder dergleichen flüssigen Medien geschlossen wird.

8. Verfahren nach einem der vorangehenden Ansprüche, **dadurch gekennzeichnet, dass** beim Auftreten eines wellenartigen Verlaufs der Druckdifferenz (Δp) auf ein Untertauchen des Endrohrs (22) in Wasser, Schlamm oder dergleichen flüssigen Medien geschlossen wird.

9. Verfahren nach einem der vorangehenden Ansprüche, **dadurch gekennzeichnet, dass** die erfasste Druckdifferenz (Δp) mit mindestens einer gespeicherten Druckdifferenz verglichen wird.

10. Verfahren nach einem der vorangehenden Ansprüche, **dadurch gekennzeichnet, dass** beim Detektieren des Eintauchens oder Untertauchens des Endrohrs (22) in Wasser, Schlamm oder dergleichen flüssigen Medien ein Abstellen der Brennkraftmaschine verhindert wird.

11. Verfahren nach einem der vorangehenden Ansprüche, **dadurch gekennzeichnet, dass** beim Detektieren des Eintauchens oder Untertauchens des Endrohrs (22) in Wasser die abgestellte Brennkraftmaschine gestartet wird.

12. Verfahren nach Anspruch 11, **dadurch gekennzeichnet, dass** nach dem Start die Drehzahl der Brennkraftmaschine erhöht wird.

13. Verfahren nach Anspruch 11 oder 12, **dadurch gekennzeichnet, dass** nach dem Start der Zeitpunkt des Einspritzbeginns und/oder der Zündwinkel der Brennkraftmaschine angepasst werden.

14. Kraftfahrzeug mit einer Brennkraftmaschine, einem Differenzdrucksensor oder zwei Drucksensoren zur Erfassung einer Druckdifferenz, sowie einer Auswerteeinrichtung zur Auswertung der vom Differenzdrucksensor erfassten Druckdifferenz, **gekennzeichnet durch** Mittel zur Ansteuerung einer Start-Stopp-Automatik (50) oder einer Zündanlage des Kraftfahrzeugs in Abhängigkeit vom Ergebnis der Auswertung.

15. Kraftfahrzeug nach Anspruch 14, **dadurch gekennzeichnet, dass** die Auswerteeinrichtung (48) ein Blockiersignal zur Start-Stop-Automatik (50) bzw. zur Zündanlage übermittelt, wenn die erfasste und von der Auswerteeinrichtung (48) ausgewertete Druckdifferenz (Δp) auf ein Eintauchen oder Untertauchen eines Endrohrs (22) des Abgastrakts (2) in Wasser, Schlamm oder dergleichen flüssigen Medien schließen lässt, und dass das Blockiersignal im Betrieb der Brennkraftmaschine ein Abstellen derselben verhindert.

## Claims

1. Method for operating a motor vehicle having an internal combustion engine, **characterized in that** a pressure difference (Δp) is evaluated in order to detect an end pipe (22) of the exhaust gas section (2) being dipped into or submersed in water, mud or similar liquid media.

2. Method according to Claim 1, **characterized in that** a pressure difference (Δp) which is detected in an exhaust gas section (2) of the internal combustion engine is evaluated.

3. Method according to Claim 1 or 2, **characterized in that** the pressure difference (Δp) between the exhaust gas pressure (p1) upstream of a particle filter (4) and the exhaust gas pressure (p2) downstream thereof, in the exhaust section (2) of the internal combustion engine is evaluated in order to detect the dipping in or the submersion of the end pipe (22).

4. Method according to one of the preceding claims, **characterized in that** the pressure difference (Δp) is detected with a difference pressure sensor (34).

5. Method according to one of the preceding claims, **characterized in that** a time-dependent change in the pressure difference (Δp) is evaluated in order to detect the dipping in or submersion of the end pipe (22).

6. Method according to one of the preceding claims, **characterized in that** when a steep drop in the pressure difference (Δp) occurs, it is inferred that the end pipe (22) is dipped into water, mud or similar liquid media.

7. Method according to one of the preceding claims, **characterized in that** when a discontinuous drop in the pressure difference (Δp) occurs, it is inferred that the end pipe (22) is dipped into water, mud or similar liquid media.

8. Method according to one of the preceding claims, **characterized in that** when a wavelike profile of the pressure difference (Δp) occurs, it is inferred that the end pipe (22) is submersed in water, mud or similar liquid media.

9. Method according to one of the preceding claims, **characterized in that** the detected pressure difference (Δp) is compared with at least one stored pressure difference.

10. Method according to one of the preceding claims, **characterized in that** when it is detected that the end pipe (22) is dipped into or is submersed in water, mud or similar liquid media, shutting down of the internal combustion engine is prevented.

11. Method according to one of the preceding claims, **characterized in that** when it is detected that the end pipe (22) is dipped into or is submersed in water, the shut-down internal combustion engine is started.

12. Method according to Claim 11, **characterized in that** after the start the rotational speed of the internal combustion engine is increased.

13. Method according to Claim 11 or 12, **characterized in that** after the start the time of the start of injection and/or the ignition angle of the internal combustion engine is adapted.

14. Motor vehicle having an internal combustion engine, a pressure difference sensor or two pressure sensors for detecting a pressure difference and an evaluation device for evaluating the pressure difference detected by the difference pressure sensor, **characterized by** means for actuating an automatic start/stop system (50) or an ignition system of the motor vehicle as a function of the result of the evaluation.

15. Motor vehicle according to Claim 14, **characterized in that** the evaluation device (48) transmits a blocking signal to the automatic start/stop system (50) or to the ignition system if the detected pressure difference (Δp) which is evaluated by the evaluation device (48) makes it possible to infer that an end pipe (22) of the exhaust gas section (2) is dipped into or submersed in water, mud or similar liquid media, and **in that** the blocking signal prevents shutting down of the internal combustion engine during operation thereof.

## Revendications

1. Procédé d'actionnement d'un véhicule automobile doté d'un moteur à combustion interne, **caractérisé en ce qu'**une différence de pression (Δp) est analysée pour détecter une immersion ou une submersion d'un tube d'extrémité (22) du système d'échappement (2) dans de l'eau, de la boue ou des agents fluides équivalents.

2. Procédé selon la revendication 1, **caractérisé en ce qu'**une différence de pression (Δp) détectée dans un système d'échappement (2) du moteur à combustion interne est analysée.

3. Procédé selon la revendication 1 ou 2, **caractérisé en ce que** la différence de pression (Δp) entre la pression des gaz d'échappement (p1) avant et (p2) après un filtre à particules (4) est analysée dans le système d'échappement (2) du moteur à combustion interne pour détecter l'immersion ou la submersion du tube d'extrémité (22).

4. Procédé selon l'une quelconque des revendications précédentes, **caractérisé en ce que** la différence de pression (Δp) est détectée à l'aide d'un capteur de différence de pression (34).

5. Procédé selon l'une quelconque des revendications précédentes, **caractérisé en ce qu'**une variation dans le temps de la différence de pression (Δp) est analysée pour détecter l'immersion ou la submersion du tube d'extrémité (22).

6. Procédé selon l'une quelconque des revendications précédentes, **caractérisé en ce qu'**on déduit d'une chute abrupte de différence de pression (Δp) une immersion du tube d'extrémité (22) dans de l'eau, de la boue ou des agents fluides équivalents.

7. Procédé selon l'une quelconque des revendications précédentes, **caractérisé en ce qu'**on déduit d'une chute discontinue de différence de pression (Δp) une immersion du tube d'extrémité (22) dans de l'eau, de la boue ou des agents fluides équivalents.

8. Procédé selon l'une quelconque des revendications précédentes, **caractérisé en ce qu'**on déduit d'une courbe ondulatoire de différence de pression (Δp) une submersion du tube d'extrémité (22) dans de l'eau, de la boue ou des agents fluides équivalents.

9. Procédé selon l'une quelconque des revendications précédentes, **caractérisé en ce que** la différence de pression (Δp) détectée est comparée à au moins une différence de pression mémorisée.

10. Procédé selon l'une quelconque des revendications précédentes, **caractérisé en ce qu'**en cas de détection d'une immersion ou d'une submersion du tube d'extrémité (22) dans de l'eau, de la boue ou des agents fluides équivalents, on évite un arrêt du moteur à combustion interne.

11. Procédé selon l'une quelconque des revendications précédentes, **caractérisé en ce qu'**en cas de détection de l'immersion ou de la submersion du tube d'extrémité (22) dans de l'eau le moteur à combustion interne arrêté est démarré.

12. Procédé selon la revendication 11, **caractérisé en ce qu'**après le démarrage, la vitesse de rotation du moteur à combustion interne est augmentée.

13. Procédé selon la revendication 11 ou 12, **caractérisé en ce qu'**après le démarrage, le moment du début d'injection et/ou l'angle d'injection du moteur à combustion interne sont adaptés.

14. Véhicule automobile doté d'un moteur à combustion interne, d'un capteur de différence de pression ou de deux capteurs de pression servant à détecter une différence de pression, ainsi que d'un dispositif d'analyse servant à analyser la différence de pression détectée par le capteur de différence de pression, **caractérisé par** la présence de moyens d'excitation d'un automatisme marche-arrêt (50) ou d'une installation d'allumage du véhicule automobile en fonction du résultat de l'analyse.

15. Véhicule automobile selon la revendication 14, **caractérisé en ce que** le dispositif d'analyse (48) transmet un signal de blocage à l'automatisme marche-arrêt (50) et/ou à l'installation d'allumage lorsque la différence de pression (Δp) détectée et analysée par le dispositif d'analyse (48) permet de penser à une immersion ou une submersion d'un tube d'extrémité (22) du système d'échappement (2) dans de l'eau, de la boue ou des agents fluides équivalents et que le signal de blocage empêche un arrêt du moteur à combustion interne en situation de fonctionnement de celui-ci.
